# EUROPEAN PATENT APPLICATION

(11) **EP 3 640 895 A1**
(43) Date of publication of application: **22.04.2020**
(21) Application number: 19203772.9
(22) Date of filing: 17.10.2019
(51) Int. Cl.: G06T 19/00

(54) **SMART CITY MANAGEMENT AND NAVIGATION TOOL**

(30) Priority: 17.10.2018 US 201862747013 P; 16.10.2019 US 201916655006
(71) Applicant: ID Technologies Inc., Calgary, AB T2H 2Z9 (CA)
(72) Inventor: Agouridis, Dimitris, Calgary, AB T2H 2Z9 (CA)
(74) Representative: Betten & Resch

(57) **Abstract**

A tool for managing and navigating a smart city is disclosed. The tool is utilized by city staff as well as users. The tool comprises a geographic information system (GIS) module and an augmented reality (AR) module that provide functionality relevant to city staff, such as infrastructure asset management, as well as users, such as visualizing locations of landmarks on a live image captured by a camera.

## Description

### PRIORITY CLAIM

This application claims priority to U.S. Provisional Patent Application No. 62/747,013, filed on October 17, 2018, and titled "'Smartpolis' Standardized Platform for a Website Portal for a Smart City," which is incorporated by reference herein.

### FIELD OF THE INVENTION

A computerized tool for managing and navigating a smart city is disclosed. The tool comprises a geographic information system (GIS) module and an augmented reality (AR) module.

### BACKGROUND OF THE INVENTION

Modern cities present many challenges for city staff and citizens. City staff have the challenge of managing infrastructure, emergency services, construction, and other activities within the city. Users (e.g., citizens of the city, visitors to the city, or members of the public) have the challenge of physically navigating through the city or town, accessing transportation, and accessing important data for the city. Here, the term "city" is used generically and can include any residential or commercial setting of any density and population.

Prior art solutions implemented by city staff have included the use of incompatible and inefficient computer systems as well as paper-based solutions (e.g., hard copy architectural plans). This has a deleterious effect on many aspects of city operations, ranging from the construction design and bidding process to the provision of emergency services and the ability of a user to navigate within the city.

What is needed is a computerized tool for integrating all aspects of the city managed by the city staff and all services and information needed by users. What is further needed is a tool that includes GIS and AR features.

### SUMMARY OF THE INVENTION

A tool for managing and navigating a smart city is disclosed. The tool is utilized by city staff as well as users. The tool comprises a GIS module and an AR module that provide functionality relevant to city staff, such as infrastructure asset management, as well as users, such as visualizing locations of landmarks on a live image captured by a camera.

### BRIEF DESCRIPTION OF THE DRAWINGS

Figure 1 depicts prior art hardware components of a client device.
Figure 2 depicts software components of a client device.
Figure 3 depicts prior art hardware components of a server.
Figure 4 depicts software components of a server.
Figure 5 depicts a system comprising a server, a client device, and a data store.
Figure 6 depicts a GIS module, an AR module, an infrastructure sub-module, an emergency services sub-module, and a navigation sub-module implemented by a client application and/or a server application.
Figure 7 depicts an exemplary 3D model generated by the GIS module of Figure 6.
Figure 8 depicts an exemplary AR image generated by the infrastructure sub-module of the AR module of Figure 6.
Figure 9A depicts a 3D model generated by the GIS module of Figure 6.
Figure 9B depicts an AR image generated by the emergency services sub-module of the AR module of Figure 6.
Figure 10 depicts an AR image generated by the navigation sub-module of the AR module of Figure 6.

### DETAILED DESCRIPTION OF THE INVENTION

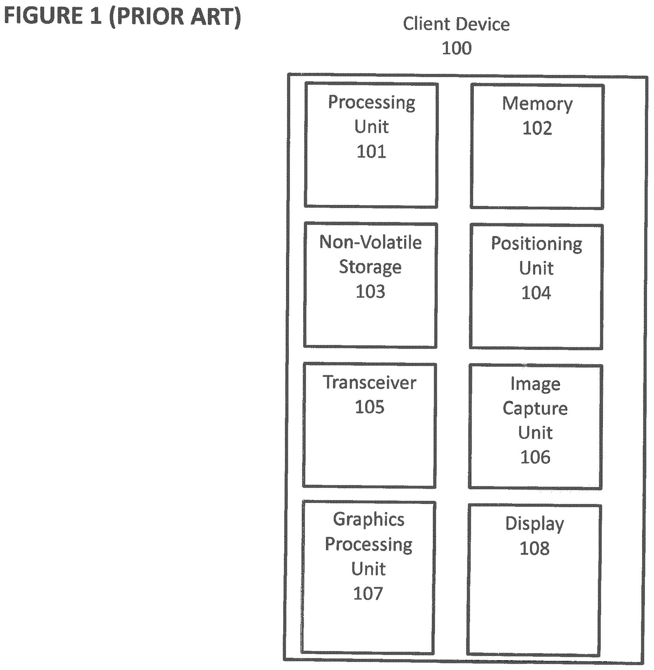

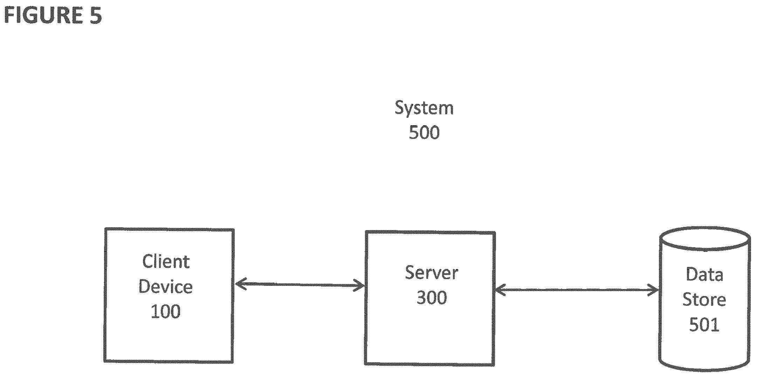

An embodiment of a computer-implemented tool for and managing and navigating a city is depicted in Figures 1-6. The tool is implemented using system 500, which comprises client device 100 and server 300, as shown in Figure 5. Applicant refers internally to this embodiment as "SMARTPOLIS."

Client device 100 will first be described. Figure 1 depicts hardware components of client device 100. These hardware components are known in the prior art. Client device 100 is a computing device that comprises processing unit 101, memory 102, non-volatile storage 103, positioning unit 104, network interface 105, image capture unit 106, graphics processing unit 107, and display 108. Client device 100 can be a smartphone, notebook computer, tablet, desktop computer, gaming unit, wearable computing device such as a watch or glasses, or any other computing device.

Processing unit 101 optionally comprises a microprocessor with one or more processing cores. Memory 102 optionally comprises DRAM or SRAM volatile memory. Non-volatile storage 103 optionally comprises a hard disk drive or flash memory array. Positioning unit 104 optionally comprises a GPS unit or GNSS unit that communicates with GPS or GNSS satellites to determine latitude and longitude coordinates for client device 100, usually output as latitude data and longitude data. Network interface 105 optionally comprises a wired interface (e.g., Ethernet interface) or wireless interface (e.g., 3G, 4G, 5G, GSM, 802.11, protocol known by the trademark "BLUETOOTH," etc.). Image capture unit 106 optionally comprises one or more standard cameras (as is currently found on most smartphones, tablets, and notebook computers). Graphics processing unit 107 optionally comprises a controller or processor for generating graphics for display. Display 108 displays the graphics generated by graphics processing unit 107, and optionally comprises a monitor, touchscreen, or other type of display.

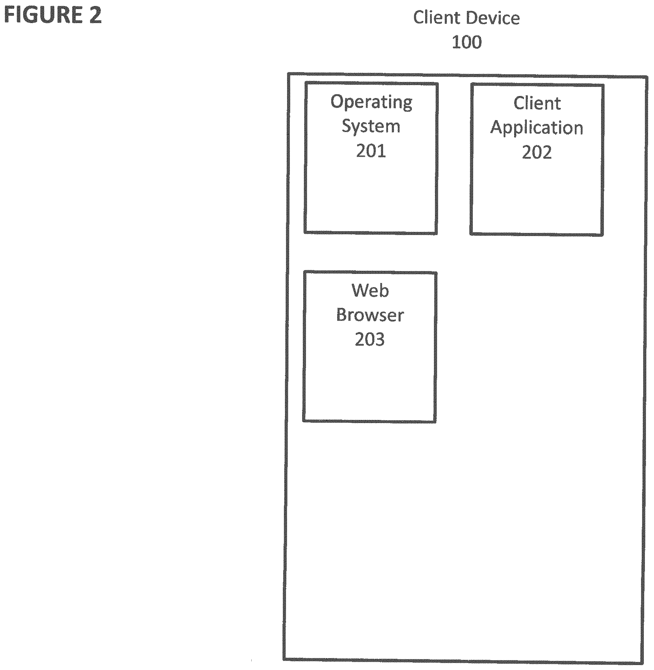

Figure 2 depicts software components of client device 100. Client device 100 comprises operating system 201 (such as the operating systems known by the trademarks "WINDOWS," "LINUX," "ANDROID," "IOS," or others), client application 202, and web browser 203.

Client application 202 comprises lines of software code executed by processing unit 101 to perform the functions described below. For example, client device 100 can be a smartphone or tablet sold with the trademark "GALAXY" by Samsung or "IPHONE" by Apple, and client application 202 can be a downloadable app installed on the smartphone or tablet. Client device 100 also can be a notebook computer, desktop computer, game system, or other computing device, and client application 202 can be a software application running on client device 100. Client application 202 forms an important component of the inventive aspect of the embodiments described herein, and client application 202 is not known in the prior art.

Web browser 203 comprises lines of software code executed by processing unit 101 to access web servers, display pages and content from web sites, and to provide functionality used in conjunction with web servers and web sites, such as the web browsers known by the trademarks "INTERNET EXPLORER," "CHROME," AND "SAFARI."

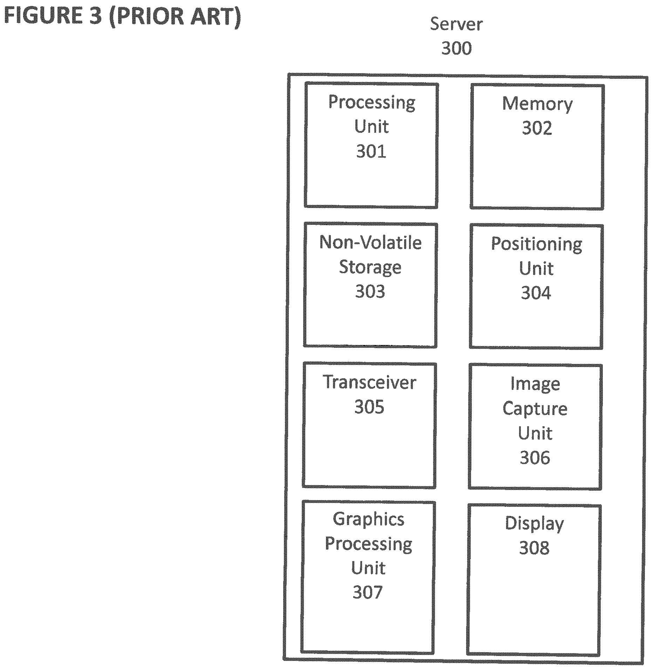

Server 300 will now be described. Figure 3 depicts hardware components of server 300. These hardware components are known in the prior art. Server 300 is a computing device that comprises processing unit 301, memory 302, non-volatile storage 303, positioning unit 304, network interface 305, image capture unit 306, graphics processing unit 307, and display 308. Server 300 can be a smartphone, notebook computer, tablet, desktop computer, gaming unit, wearable computing device such as a watch or glasses, or any other computing device.

Processing unit 301 optionally comprises a microprocessor with one or more processing cores. Memory 302 optionally comprises DRAM or SRAM volatile memory. Non-volatile storage 303 optionally comprises a hard disk drive or flash memory array. Positioning unit 304 optionally comprises a GPS unit or GNSS unit that communicates with GPS or GNSS satellites to determine latitude and longitude coordinates for client device 300, usually output as latitude data and longitude data. Network interface 305 optionally comprises a wired interface (e.g., Ethernet interface) or wireless interface (e.g., 3G, 4G, 5G. GSM, 802.11, protocol known by the trademark "BLUETOOTH," etc.). Image capture unit 306 optionally comprises one or more standard cameras (as is currently found on most smartphones, tablets, and notebook computers). Graphics processing unit 307 optionally comprises a controller or processor for generating graphics for display. Display 308 displays the graphics generated by graphics processing unit 307, and optionally comprises a monitor, touchscreen, or other type of display.

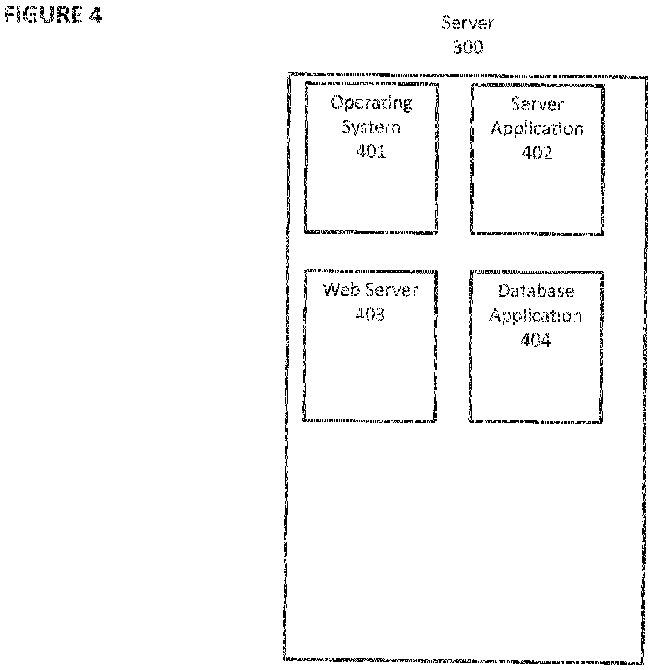

Figure 4 depicts software components of server 300. Server 300 comprises operating system 401 (such as the operating systems known by the trademarks "WINDOWS," "LINUX, "ANDROID," "IOS," or others), server application 402, web server 403, and database application 404.

Server application 402 comprises lines of software code executed by processing unit 301 to interact with client application 202 and to perform the functions described below. Server application 402 forms an important component of the inventive aspect of the embodiments described herein, and server application 402 is not known in the prior art.

Web server 403 is a web page generation program capable of interacting with web browser 203 on client device 100 to display web pages, such as the web server known by the trademark "APACHE."

Database application 404 comprises lines of software code executed by processing unit 301 to generate and maintain a database, such as an SQL database.

Figure 5 depicts system 500, which comprises client device 100, server 300, and data store 501. One of ordinary skill in the art will appreciate that client device 100, server 300, and data store 501 are exemplary and that system 500 can include additional client devices 100, servers 300, and data stores 501. Client device 100 and server 300 can communicate with each other over a wired or wireless network or through a local connection. Server 300 communicates with data store 501, which, for example, can hold the data accessed by database application 404.

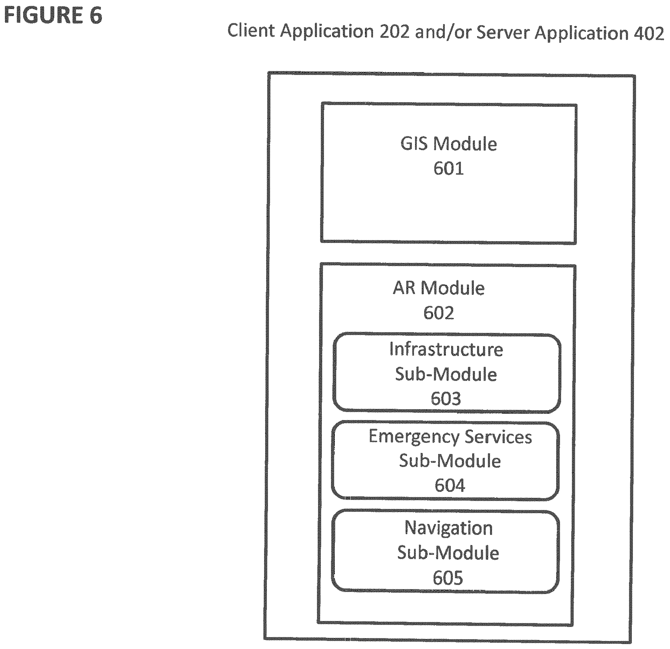

Figure 6 depicts modules implemented by client application 202 and server application 402. One of ordinary skill in the art will appreciate that the software-based functions described herein can be implemented solely by client application 202, solely by server application 402, or collectively by client application 202 and server application 402. Here, client application 202 and/or server application 402 comprise GIS module 601 and AR module 602. AR module 602 comprises infrastructure sub-module 603, emergency services sub-module 604, and navigation sub-module 605. Each of these modules and sub-modules comprises lines of software code executed by processing unit 101 in client device 100 and/or processing unit 301 in server 300.

The functionality provided by each module and sub-module will be discussed in turn.

### GIS MODULE 601

GIS module 601 provides a GIS system for city staff and users. GIS module 601 accesses all available maps of the city, which typically will be stored in data store 501 maintained by the city. The maps can include design and architectural drawings for buildings, streets, utilities, and other items within the city. The maps can include 2D maps and 3D models, and the maps optionally can be geo-referenced, meaning that each point within the map is associated with a precise location (e.g., latitude data and longitude data, and optionally, depth data). The maps can be displayed by GIS module 601 on display 108 of client device 100 or display 308 of server 300.

GIS module 601 allows contractors to develop a proposed design within a map and to submit it through system 500 to the city staff for review, comments, and approval or rejection. GIS module 601 can generate a visualization of the proposed design over the existing 2D map or 3D model so that city officials can assess the design.

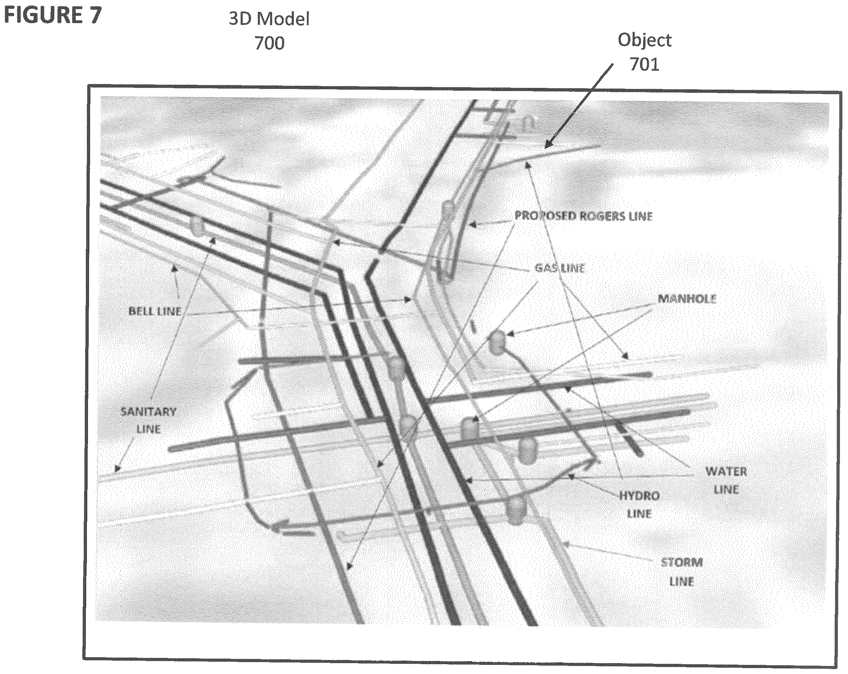

Figure 7 depicts an example of a rendering of 3D model 700 generated by GIS module 601. 3D model 700 can be stored in data store 501 and accessed by server 300 and client device 100. 3D model 700 shows the three-dimensional location of a plurality of utility lines within the city, where each utility line is represented as an object. Here, exemplary object 701 is a water line. 3D model 700 optionally can show utility lines that are proposed to be installed, as well as utility lines that are already installed. For example, exemplary object 701 can instead be a water line that is proposed to be installed by a contractor of the city. Optionally, already-installed utility lines can be shown in a first color, and proposed utility lines can be shown in a second color. By displaying already-installed utility lines and proposed utility lines, any potential conflicts can be identified and addressed. Optionally, the potential conflicts can be highlighted in a third color and/or an alert can be generated (such as a text window) indicating the presence of the potential conflict.

### AR MODULE 602

AR module 602 provides AR features, many of which utilize GIS module 601 as well, that are available on client device 100, with or without assistance from server 300, in a variety of different contexts.

### Infrastructure Sub-Module 603

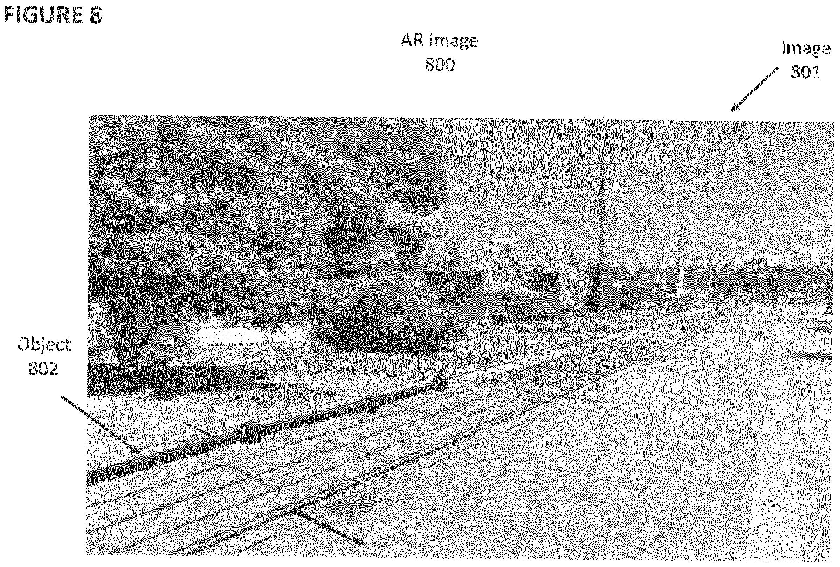

The operation of infrastructure sub-module 603 within AR module 602 is illustrated with reference to Figure 8.

In Figure 8, a user with client device 100 visits a physical site for which data exists in client device 100 and/or server 300. The user captures the physical site using image capture unit 106, which displays image 801 in real-time on display 108. Client device 100 determines the geo-location of client device 100 using positioning unit 104 and determines the orientation of client device 100 by comparison to known markers reflected in data (e.g., manhole covers). Client device 100 then generates visualizations of utility lines that are buried underground within that land area, such as exemplary object 802 that represents a sewer line. Client device 100 overlays objects such as object 802 over image 801 to generate AR image 800.

Optionally, client device 100 also can generate visualizations of utility lines that are proposed to be installed within that land area. For example, object 802 can be a utility line that is intended to be installed but that has not yet been approved by the city staff. Thus, the user will be able to "see" existing utility lines that are located under the surface in that area as well as proposed utility lines. This is useful, for example, if the user is a construction worker who is going to install a new pipe and does not want to disrupt or alter any existing utility lines. Optionally, a variety of different colors can be used for the images of existing lines and planned utility lines. In particular, the color of the planned utility lines can be different than the colors used for existing utility lines.

### Emergency Services Sub-Module 604

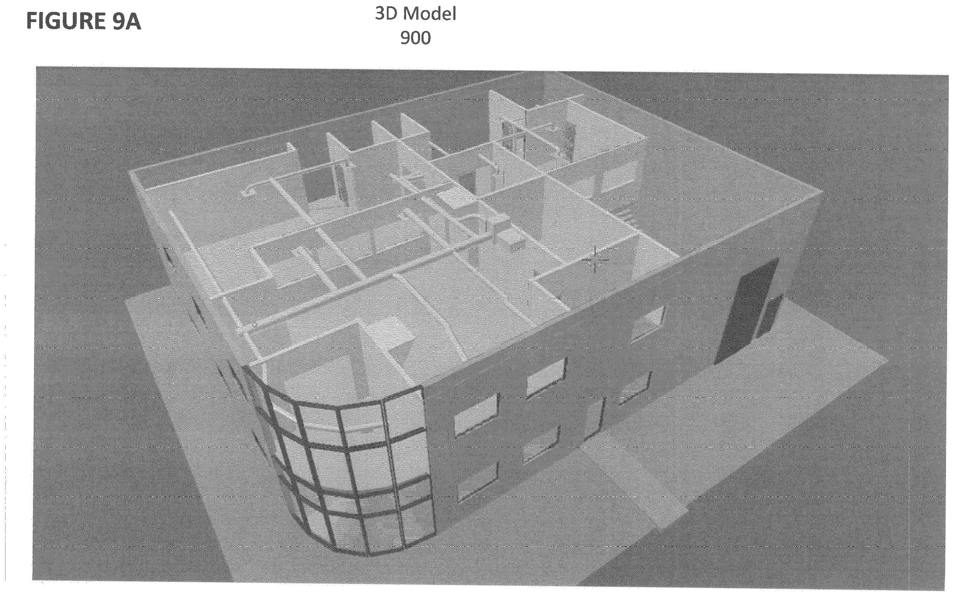

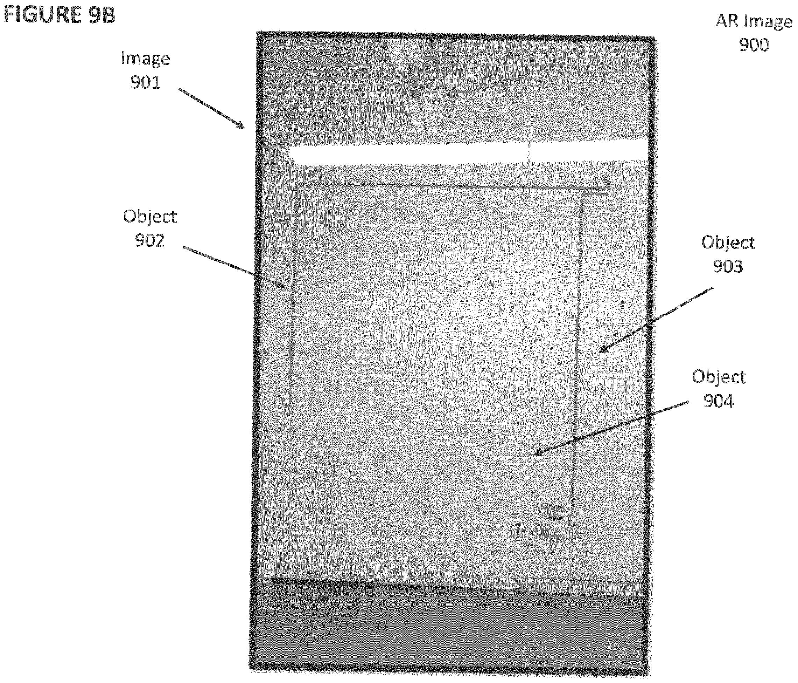

The operation of emergency services sub-module 604 within AR module 602 is illustrated with reference to Figures 9A and 9B.

In Figure 9A, client device 100 or server 300 generates 3D model 900 of a structure. 3D model 900 can be created, for example, during the design process when an architect or engineer builds a CAD design of the structure, or it can be generated for an existing structure through surveying. 3D model 900 can be stored in data store 601 and accessed by server 300 and client device 100.

Prior to visiting a physical site, emergency responders can navigate through the structure in question using 3D model 900. This may allow the emergency responders to diagnose the cause of the issue before arriving at the physical site. For example, if there is a fire within the structure, the emergency responder might be able to see that there are an unusually high number of electrical conduits within a particular wall, which can be a likely cause for the fire.

In Figure 9B, a user (such as an emergency responder) with client device 100 visits a physical site corresponding to 3D model 900. The user captures the physical site using image capture unit 106, which displays image 901 in real-time on display 108. Client device 100 determines the geo-location of client device 108 using positioning unit 104 and determines the orientation of client device 100 by comparison to known markers reflected in data (e.g., walls). Client device 100 then generates visualizations of utility lines that are buried underground or with the walls of the displayed area, here represented by objects 902, 903, and 904, to create AR image 900. Objects 902, 903, and 904 are obtained from GIS module 601, which contains various maps and models (such as 3D model 900) for the structure.

Thus, GIS module 601, AR module 602, and emergency services sub-module 604 enable an emergency responder to quickly determine the location of key infrastructure, such as electrical lines, gas lines, and water lines. Optionally, certain items, such as shut-off valves for gas lines, electrical switch boxes, and water main hook-ups, can be highlighted in a special color so that the emergency responder can quickly locate those items

### Navigation Sub-Module 605

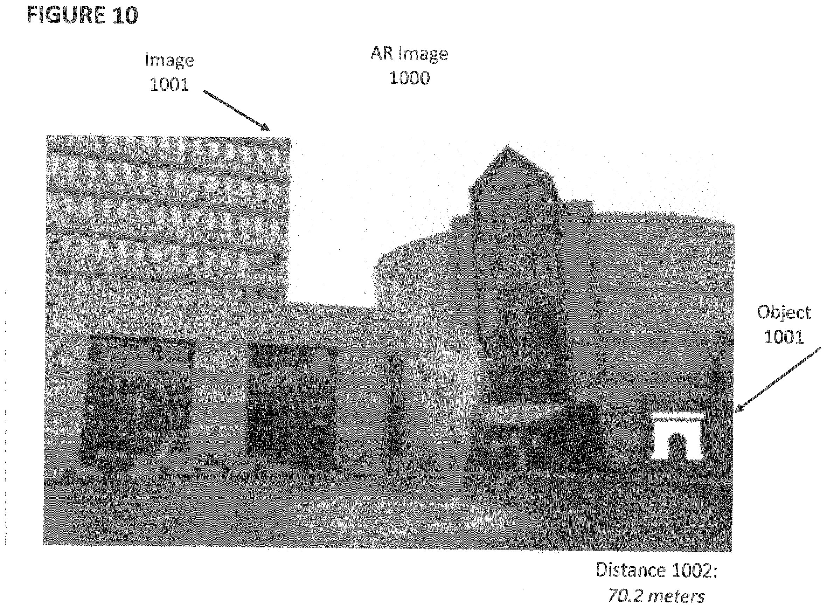

The operation of navigation sub-module 605 within AR module 602 is illustrated with reference to Figure 10.

GIS module 601 is able to access geolocation data for buildings, monuments and attractions. Users will then be able to obtain AR navigation cues to help them to find an item of interest. In Figure 10, a user wishes to visit a landmark within the city, which here is a famous archway. GIS module 601 has access to geolocation data for that archway. The user operates client device 100. The user captures the physical site using image capture unit 106, which displays image 1001 in real-time on display 108. Client device 100 determines the geo-location of client device 100 using positioning unit 104 and determines the orientation of client device 108 by comparison to known markers reflected in data (e.g., manhole covers).

Client device 100 then generates a visualization of object 1001, which corresponds to the archway the user is attempting to locate. The user then will understand where the archway is located in relation to his or her current surroundings and can walk to the archway. Here, the archway is behind the building shown, which is indicated by the fact that object 1001 is shown with a shadowy glow. Optionally, client device 100 can display distance 1002, which is the distance between client device 100 and the archway, which can be calculated using the geo-location data for the archway and the client device.

Thus, system 500 implementing GIS module 601 and AR module 602 provides several useful features for city staff and users that are not present in the prior art.

It should be noted that, as used herein, the terms "over" and "on" both inclusively include "directly on" (no intermediate materials, elements or space disposed therebetween) and "indirectly on" (intermediate materials, elements or space disposed therebetween). Likewise, the term "adjacent" includes "directly adjacent" (no intermediate materials, elements or space disposed therebetween) and "indirectly adjacent" (intermediate materials, elements or space disposed there between), "mounted to" includes "directly mounted to" (no intermediate materials, elements or space disposed there between) and "indirectly mounted to" (intermediate materials, elements or spaced disposed there between), and "electrically coupled" includes "directly electrically coupled to" (no intermediate materials or elements there between that electrically connect the elements together) and "indirectly electrically coupled to" (intermediate materials or elements there between that electrically connect the elements together). For example, forming an element "over a substrate" can include forming the element directly on the substrate with no intermediate materials/elements therebetween, as well as forming the element indirectly on the substrate with one or more intermediate materials/elements there between.

## Claims

1. An augmented reality method for displaying hidden objects on a live image captured by a camera, comprising:
capturing, by the camera, a live image in front of the camera;
obtaining, from a geographic information system, location information for the hidden objects, wherein the hidden objects are hidden from view in the live image; and
displaying, by a display unit, an augmented reality image comprising visualizations of the hidden objects over the live image.

2. The method of claim 1, wherein the hidden objects comprise gas lines.

3. The method of claim 2, wherein the gas lines are contained in a wall; or wherein the gas lines are underground.

4. The method of claim 1, wherein the hidden objects comprise electrical lines.

5. The method of claim 4, wherein the electrical lines are contained in a wall; or wherein the electrical lines are underground.

6. The method of claim 1, wherein the hidden objects comprise water lines.

7. The method of claim 6, wherein the water lines are contained in a wall; or wherein the water lines are underground.

8. The method of one of claims 1 to 7, further comprising:
displaying, by the display unit, a three-dimensional model of a structure contained in the live image.

9. An augmented reality method for displaying a visualization of a landmark on a live image, the method implemented by a client device, the method comprising:
capturing, by a camera within the client device, the live image in front of the camera;
obtaining, by a positioning unit within the client device, location information for the client device;
obtaining, from a geographic information system, location information for a landmark; and
displaying, by a display unit within the client device, an augmented reality image comprising a visualization of the landmark over the live image.

10. The method of claim 9, wherein the augmented reality image indicates the landmark is hidden from view in the live image; and/or
wherein the location information for the client device comprises longitude data and latitude data.

11. The method of claim 10, wherein the location information for the landmark comprises longitude data and latitude data.

12. The method of one of claims 9 to 11, further comprising:
displaying, by the display unit, a distance between the client device and the landmark.

13. A computing system for generating and displaying an augmented reality image, the computing system comprising:
a camera for capturing a live image in front of the camera;
a positioning unit for determining location information for the positioning unit;
a geographic information system storing location information for objects;
a processing unit executing an augmented reality module to generate an augmented reality image comprising visualizations of the objects over the live image using the location information for the positioning unit and the location information for the objects; and
a display for displaying the augmented reality image.

14. The computing system of claim 13, wherein the camera, positioning unit, and processing unit are contained within a client device.

15. The computing system of claim 14, wherein the geographic information system is implemented by a server; or
wherein the geographic information system is implemented by the client device and a server.
